# EUROPÄISCHE PATENTSCHRIFT

(11) **EP 1 691 275 B1**
(45) Veröffentlichungstag und Bekanntmachung des Hinweises auf die Patenterteilung: **14.04.2010**
(21) Anmeldenummer: 05002656.6
(22) Anmeldetag: 09.02.2005
(51) Int. Cl.: G06F 9/44

(54) **Verfahren und Vorrichtung zum rechnergestützten Erzeugen einer graphischen Benutzeroberfläche**
Method and apparatus for computer-assisted creation of a graphical user interface
Procédé et appareil pour créer une interface utilisateur graphique aidé par l'ordinateur

(43) Veröffentlichungstag der Anmeldung: 16.08.2006
(73) Patentinhaber: Deutsche Post AG, 53113 Bonn (DE)
(72) Erfinder: Kranz, Jürgen, 50374 Erftstadt (DE); Westerweller, Jörg, 51570 Windeck/Rosbach (DE)
(74) Vertreter: Jostarndt, Hans-Dieter

(56) Entgegenhaltungen:
- WO-A-2004/107200
- DE-A1- 19 946 660
- PFISTERER CHRISTOPH: "A Semantic Description Language for Platform-Independent Graphical User Interfaces" [Online] 2003, , STUTTGART , XP002348223 Gefunden im Internet: URL:http://elib.uni-stuttgart.de/opus/voll texte/2003/1314/pdf/DIP-2017.pdf> [gefunden am 2005-09-30] * Seite 26, Zeilen 10-22 * * Seite 71, Zeile 29 - Seite 72, Zeile 9 * * Seite 78, Zeilen 16-31 * * Seite 84, Zeilen 24-30 * * Seite 86, Zeile 32 - Seite 87, Zeile 6 * * Seite 88, Zeilen 14-24 * * Seite 99, Zeilen 2-5 * * Absatz [2.2.6] * * Absatz [03.2] * * Absatz [5.5.2] * * Absätze [06.2] - [6.3.2] * * Absatz [9.2.8] *
- HARMONIA INC: "Java Renderer User Manual"[Online] 29. Juni 2001 (2001-06-29), Seiten 1-117, XP002348239 Gefunden im Internet: URL:defense.harmonia.com/products/java/man ual/v1.0b/uiml2jr-UserMan.pdf> [gefunden am 2005-09-30]

## Beschreibung

Die Erfindung betrifft ein Verfahren zum rechnergestützten Erzeugen einer graphischen Benutzeroberfläche für ein Vorgangsbearbeitungsmodul, wobei die Benutzeroberfläche wenigstens ein Steuerelement aufweist und das Vorgangsbearbeitungsmodul auf einem Computermittel installiert ist.

Die Erfindung betrifft ferner eine Vorrichtung zur Durchführung des Verfahrens und ein computerlesbares Medium, das Befehle zum Ausführen des Verfahrens auf einem Computermittel aufweist.

Bei Anwendungsprogrammen, welche auf Computermitteln installiert und ausgeführt werden, ist es bekannt, graphische Benutzerschnittstellen einzusetzen, um eine vereinfachte Interaktion eines Benutzers mit dem Anwendungsprogramm zu ermöglichen. Derartige Benutzeroberflächen werden auch als Graphical User Interface (GUI) bezeichnet. Benutzeroberflächen von Anwendungsprogrammen erfüllen zum einen die Funktion, dass Elemente und Informationen auf einem Bildschirm angezeigt werden. Zum anderen müssen sie die Ausführung von Aktionen ermöglichen, welche von dem Benutzer an der Benutzeroberfläche initiiert werden. Wird eine Benutzeroberfläche beispielsweise in einem Retailsystem in Form eines Filial- oder Automatensystems eingesetzt, in welchem verschiedene Transaktionen durchgeführt werden können, wird durch die Ansteuerung von Elementen oder die Eingabe von Werten auf der Benutzeroberfläche die Durchführung der Transaktionen gesteuert. Üblicherweise enthalten Anwendungsprogramme dazu programmierte GUI-Funktionen, welche den Ablauf und die Ansteuerung der einzelnen GUI-Elemente festlegen und Kernfunktionen, welche die Abwicklung der Transaktionen mit dem Anwendungsprogramm betreffen.

Die meisten Anwendungsprogramme sind so gestaltet, dass sie mit einer definierten Benutzeroberfläche betrieben werden. Dabei ist der Programmcode der GUI-Elemente direkt mit den Steuerelementen der Benutzeroberfläche verbunden. Soll ein Anwendungsprogramm mit einer veränderten oder vollständig anderen Benutzeroberfläche betrieben werden, stellt es daher einen aufwändigen Prozess dar, den Programmcode der Anwendungssoftware zu ändern, um eine geänderte Benutzeroberfläche zu implementieren.

Um jegliche Benutzeroberfläche mit verschiedenen Anwendungsprogrammen nutzen zu können, ist es beispielsweise aus der europäischen Patentanmeldung EP 0 798 634 Al bekannt, die Funktionen der Benutzeroberfläche von den Kernfunktionen des Anwendungsprogrammes zu trennen. Dazu wird ein objektorientiertes Programmiermodell mit einem so genannten "Look&Feel"-Agenten (L&F-Agent) verwendet. Der Agent agiert als Server für einen oder mehrere logische Objekt-Clients. Ein derartiger Agent steuert die Darstellung und das Verhalten der Benutzeroberfläche, während ein Logikobjekt die Funktionen des Anwendungsprogrammes durchführt. Dem L&F-Agenten liegen dabei keine Informationen über die Funktionen der Kernlogik vor und die Kernlogik weiß nicht, wie die Benutzeroberfläche aussieht oder sich verhält.

Ferner beschreibt die internationale Patentanmeldung WO 2004/107200 A1 ein System und ein Verfahren zur Steuerung von Elementen einer Benutzeroberfläche mit Daten. Ein Computermittel mit einem Anwendungsprogramm ist dabei in zwei Bereiche aufgeteilt, wodurch der Logikbereich von dem Bereich der Benutzeroberfläche getrennt ausgebildet ist. Eine Verbindungskomponente beschreibt die Beziehung zwischen den Elementen der Benutzeroberfläche und deren Eigenschaften mit Datenwerten aus einer Datenquelle.

Ferner sind semantische Sprachen für Plattform-unabhängige graphische Benutzeroberflächen bekannt. Dabei wird im Wesentlichen ein Toolkit zur Erzeugung von Benutzeroberflächen vorgesehen, die unabhängig von der Plattform sind, auf der sie betrieben werden sollen. Ein generisches Kommunikationsmodell erlaubt die Netzwerktransparenz und Unabhängigkeit von einer bestimmten Programmiersprache. Eine XML-basierte Beschreibungssprache reduziert den Kodierungsaufwand und erlaubt die Erstellung von interaktiven Dialog-Editoren. Dabei ist die graphische Benutzeroberfläche von der Kernlogik der Anwendung getrennt. Die beiden Teile kommunizieren über ein festes generisches Protokoll und können in verschiedenen Prozessen oder sogar auf verschiedenen Maschinen angesiedelt werden.

Ferner sind Java Renderer bekannt, die insbesondere die Benutzung von Fensterereignissen und dabei die Erzeugung eines Wizards aus mehreren Bildschirmen, welche dem Benutzer nacheinander angezeigt werden, umfassen. Jeder Bildschirm hat beispielsweise einen "Vor"- oder "Zurück"-Button.

Die deutsche Offenlegungsschrift DE 199 46 660 A1 offenbart ferner ein Verfahren zur Darstellung einer graphischen Oberfläche, bei dem eine Beschreibung B und ein Programm P, dem die graphische Benutzeroberfläche zugeordnet ist, getrennt gespeichert werden. Bei Ausführung des Programms wird die graphische Oberfläche von diesem nach Maßgabe der getrennt gespeicherten Beschreibung dargestellt. Hierdurch werden Änderungen der graphischen Oberfläche ohne erneute Übersetzung und Installation des Programms P ermöglicht. In der Beschreibung B ist dabei wenigstens das Layout der graphischen Oberfläche (Definitionen und Hierarchie der Dialogboxen, Anordnung, Typ, Größe, Position und Style der Kontrollelemente), die Zuordnung von Kontrollelementen zu MML-Kommandos und Aktionen, die aufgrund externer Reize wie einem Mausklick von dem Programm zu leisten sind, codiert.

Um Systeme bereitzustellen, welche möglichst einfach erweiterbar oder veränderbar sind, ist es ferner bekannt, derartige Systeme modular auszubilden. Bei den Modulen handelt es sich um standardisierte Komponenten, welche von mehreren anderen Komponenten verwendet werden können. Vorzugsweise können neue Komponenten nach dem "Plug&Play"-Prinzip angeschlossen werden, ohne dass das gesamte System angepasst werden muss.

Um neue Vorgänge in bestehende Retailsysteme integrieren zu können, so dass diese an graphischen Benutzeroberflächen darstellbar und mit einem Anwendungsprogramm durchführbar sind, müssen neue Komponenten in das bestehende System integriert werden. Bei Retailsystemen im Bereich des Versicherungs-, Finanz- und Logistikwesens müssen beispielsweise neue Vorgänge wie die Eröffnung eines Bankkontos, der Abschluss eines Versicherungsvertrages, der Verkauf eines Tickets oder die Einlieferung eines Versandpaketes abgebildet werden. Dies erfordert insbesondere die Erzeugung einer entsprechenden Benutzeroberfläche zur Interaktion eines Benutzers mit dem Anwendungsprogramm, wobei zu beachten ist, dass in einem Retailsystem unterschiedliche Vorrichtungen zur Darstellung der Benutzeroberfläche verwendet werden können. Dazu zählen beispielsweise Computermonitore, Automatendisplays, Displays von Mobiltelefonen oder Web-Sites.

Aufgabe der Erfindung ist es, ein Verfahren zum rechnergestützten Erzeugen einer graphischen Benutzeroberfläche bereitzustellen, das die Verwendung variabler Benutzeroberflächen für ein Anwendungsprogramm ermöglicht. Dabei soll berücksichtigt werden, dass das Verfahren auf einfache Weise die modulartige Erweiterung eines Gesamtsystems ermöglicht, in welchem mehrere Vorgänge eines Retailsystems abgebildet werden.

Aufgabe der Erfindung ist es ferner, eine Vorrichtung zur Durchführung des Verfahrens bereitzustellen.

Erfindungsgemäß wird diese Aufgabe durch ein Verfahren mit den Merkmalen des unabhängigen Anspruches 1 gelöst. Vorteilhafte Weiterbildungen des Verfahrens ergeben sich aus den Unteransprüchen 2-8. Die Aufgabe wird ferner durch eine Vorrichtung nach Anspruch 9 gelöst. Vorteilhafte Ausführungsformen der Vorrichtung ergeben sich aus den Unteransprüchen 10-11. Anspruch 12 gibt ein computerlesbares Medium zur Durchführung des Verfahrens an.

Bei dem erfindungsgemäßen Verfahren zum rechnergestützten Erzeugen einer graphischen Benutzeroberfläche weist die Benutzeroberfläche mehrere Steuerelemente auf, welche abgearbeitet und/oder befüllt werden. Beispielsweise werden in einem Assistent-basierten System Steuerelemente mit Werten befüllt oder Schalt- oder Funktionsflächen betätigt. Die Steuerelemente der Benutzeroberfläche können dabei zur Interaktion eines Benutzers mit einem Vorgangsbearbeitungsmodul dienen, wobei das Vorgangsbearbeitungsmodul auf einem Computermittel installiert ist, das in Verbindung mit einem Anzeigemittel steht. In diesem Fall werden die Steuerelemente über das Anzeigemittel von einem Nutzer befüllt oder betätigt. Die Befüllung von Steuerelementen kann dabei neben einer manuellen Eingabe auch über das Einlesen von maschinenlesbaren Informationen wie beispielsweise Barcodes erfolgen. Die Steuerelemente bzw. die damit verbundenen Datenobjekte können ferner durch den Inhalt einer Datenquelle befüllt werden, deren Werte den Steuerelementen zuzuordnen sind. Bei der Datenquelle handelt es sich beispielsweise um eine Datei, welche unabhängig von systemeigenen Vorgangsbearbeitungsmodulen von einer Vorrichtung erzeugt wurde. Dies kann beispielsweise bei einem Automaten der Fall sein, auf welchem ein Vorgangsbearbeitungsmodul und der zugehörige Maskenarbeitsbereich nicht lauffähig sind, dessen erfasste Daten jedoch einheitlich im System der Vorgangsbearbeitungsmodule verarbeitet werden sollen.

Das erfindungsgemäße Verfahren sieht das Zuordnen von wenigstens einem Maskenarbeitsbereich mit wenigstens einem Steuerelement zu einem Vorgangsbearbeitungsmodul vor, wobei jedem Steuerelement ein Datenobjekt zugeordnet wird. Das Vorgangsbearbeitungsmodul wird durch ein Startmodul gestartet, wobei beim Starten wenigstens ein Controller, eine Funktionseinheit und ein Datencontainer des Vorgangsbearbeitungsmoduls initialisiert werden. Dabei wird eine Controller-Konfigurationsdatei zur Initialisierung des Controllers eingelesen, wobei die Controller-Konfigurationsdatei die Konfiguration der Darstellung des Maskenarbeitsbereiches des betreffenden Vorgangsbearbeitungsmoduls beinhaltet. Ferner wird eine Datencontainer-Konfigurationsdatei zur Initialisierung des Datencontainers eingelesen, wobei die Datencontainer-Konfigurationsdatei die Konfiguration der Datenobjekte des Datencontainers des betreffenden Vorgangsbearbeitungsmoduls und die Konfiguration der Operationen für die Kommunikation zwischen dem Maskenarbeitsbereich, der Funktionseinheit und dem Datencontainer beinhaltet. Das Verfahren sieht ferner das Initialisieren einer Darstellungskomponente durch den Controller und das Ermitteln und Initialisieren des Maskenarbeitsbereiches des Vorgangsbearbeitungsmoduls durch den Controller vor. Die Steuerelemente des Maskenarbeitsbereiches werden initialisiert und können durch einen Nutzer oder eine eingespeiste Datenquelle befüllt und/oder betätigt werden. Die Controller-Konfigurationsdatei und/oder die Datencontainer-Konfigurationsdatei werden vorzugsweise im XML-Format (Extensible Markup Language) bereitgestellt.

In einem besonders bevorzugten Ausführungsbeispiel der Erfindung werden die Steuerelemente als graphische Benutzeroberfläche auf einem Anzeigemittel dargestellt und dienen zur Interaktion eines Benutzers mit einem Vorgangsbearbeitungsmodul. Die Steuerelemente werden befüllt und/oder abgearbeitet, wobei der Maskenarbeitsbereich über die Darstellungskomponente auf die Datenobjekte des Datencontainers zugreift.

In einem weiteren Ausführungsbeispiel der Erfindung werden die Steuerelemente nicht auf einem Anzeigemittel angezeigt, sondern eine Datenquelle wird über eine Schnittstelle eingelesen, wobei der Inhalt der Datenquelle den Datenobjekten des Datencontainers eines Vorgangsbearbeitungsmodules zugeordnet werden kann. Die Steuerelemente des Maskenarbeitsbereiches werden in diesem Fall befüllt, indem die Steuerelemente und damit die Datenobjekte des Datencontainers automatisch mit Werten der Datenquelle gefüllt werden. Auch die Abarbeitung von Steuerelementen wie Schalt- oder Funktionsflächen erfolgt automatisch, so dass der Maskenarbeitsbereich des Vorgangsbearbeitungsmoduls abgearbeitet werden kann, als ob er auf einem Anzeigemittel von einem Nutzer durchlaufen würde.

Die Funktionseinheit hat keine Kenntnis von den Steuerelementen und hat folglich auch keine unmittelbare Kontrolle über die Objekte der Benutzeroberfläche. Gleichermaßen wirken Änderungen von Feldinhalten in den Steuerelementen nicht unmittelbar auf die Funktionseinheit. Die Funktionseinheit ist vorzugsweise frei von einem bestimmten Status, da sich der Status eines Vorgangsbearbeitungsmoduls in den konkreten Werten der Datenobjekte im Datencontainer widerspiegelt. Die Ausführung der Funktionseinheit ohne Status hat insbesondere den Vorteil, dass die Funktionseinheit dadurch flexibel im Frontend oder im Backend eines Gesamtsystems angeordnet werden kann.

Bei einer Änderung eines Wertes innerhalb der Funktionseinheit, wird das zugeordnete Datenobjekt, das den Wert enthält, über die Darstellungskomponente an den Maskenarbeitsbereich und alle Steuerelemente weitergeleitet, welche den Wert darstellen. Dabei erhält die Funktionseinheit die Kontrolle, was es ihr ermöglicht, Berechnungen, Dateizugriffe, etc. durchzuführen. Insbesondere kann die Funktionseinheit ein laufendes Vorgangsbearbeitungsmodul pausieren lassen und ein neues Vorgangsbearbeitungsmodul starten. Bei einer Änderung eines Wertes auf der Benutzeroberfläche leitet das entsprechende Steuerelement den Wert an die Funktionseinheit und den Datencontainer weiter, wobei der Wert zu dem Datenobjekt gespeichert wird, welches dem Steuerelement zugeordnet ist. Die Funktionseinheit manipuliert die Datenobjekte und das Steuerelement stellt den konkreten aktuellen Inhalt und Zustand des Datenobjektes dar, nachdem die Kontrolle von der Funktionseinheit wieder an den Maskenarbeitsbereich übergegangen ist. Diese Verfahrensschritte werden sowohl bei einer Abarbeitung durch einen Benutzer auf einem Anzeigemittel als auch bei der automatischen Abarbeitung einer über eine Schnittstelle eingespeisten Datenquelle durchgeführt.

In einem besonders bevorzugten Ausführungsbeispiel der Erfindung werden auf dem Computermittel mehrere Vorgangsbearbeitungsmodule installiert und ein erstes Vorgangsbearbeitungsmodul ruft ein zweites Vorgangsbearbeitungsmodul auf, indem das gemeinsame Startmodul das zweite Vorgangsbearbeitungsmodul startet und der Maskenarbeitsbereich des zweiten Vorgangsbearbeitungsmoduls initialisiert wird, wobei der zweite Maskenarbeitsbereich bei der Initialisierung und Abarbeitung der Steuerelemente über seine Darstellungskomponente auf Inhalte seines Datencontainers zugreift.

Die Erfindung umfasst ferner eine Vorrichtung zum rechnergestützten Erzeugen einer graphischen Benutzeroberfläche mit mehreren Steuerelementen. Die Steuerelemente können auf einem Anzeigemittel dargestellt werden und zur Interaktion eines Benutzers mit einem Vorgangsbearbeitungsmodul dienen, wobei das Vorgangsbearbeitungsmodul auf einem Computermittel installiert ist, das in Verbindung mit dem Anzeigemittel steht. Das Vorgangsbearbeitungsmodul umfasst dabei wenigstens einen Maskenarbeitsbereich, einen Controller, einen Datencontainer und eine Funktionseinheit. Die Vorrichtung weist ferner ein Startmodul zum Starten des Vorgangsbearbeitungsmoduls auf, wobei das Startmodul Mittel zum Initialisieren wenigstens des Controllers, der Funktionseinheit und des Datencontainers aufweist. Der Controller umfasst wenigstens Mittel zum Einlesen einer Controller-Konfigurationsdatei, Mittel zum Initialisieren einer Darstellungskomponente sowie Mittel zum Ermitteln und Initialisieren des Maskenarbeitsbereiches des Vorgangsbearbeitungsmoduls. Der Maskenarbeitsbereich umfasst wenigstens Mittel zum Initialisieren der Steuerelemente des Maskenarbeitsbereiches auf der graphischen Benutzeroberfläche und Mittel zum Zugreifen auf Datenobjekte des Datencontainers über die Darstellungskomponente.

In einem weiteren Ausführungsbeispiel der Erfindung umfasst die Vorrichtung eine Schnittstelle zum Einlesen einer Datenquelle und Mittel zum Zuordnen des Inhaltes der Datenquelle zu Datenobjekten des Datencontainers des Vorgangsbearbeitungsmoduls. Die Vorrichtung umfasst ferner Mittel zur Befüllung von Datenobjekten, welche Steuerelementen zugeordnet sind, mit Werten der Datenquelle.

In einem besonders bevorzugten Ausführungsbeispiel der Vorrichtung sind auf dem Computermittel mehrere Vorgangsbearbeitungsmodule installiert, welche jeweils wenigstens eine Controller-Konfigurationsdatei, eine Datencontainer-Konfigurationsdatei, einen Maskenarbeitsbereich, eine Funktionseinheit und einen Datencontainer aufweisen, wobei ein Vorgangsbearbeitungsmodul jeweils einen fachlichen Vorgang eines Retailsystems abbildet.

Das erfindungsgemäße Verfahren zum rechnergestützten Erzeugen einer graphischen Benutzeroberfläche auf einem Anzeigemittel hat zusammen mit der zugehörigen Vorrichtung den Vorteil, dass die Funktionseinheit und der Datencontainer des Vorgangsbearbeitungsmoduls getrennt von der Präsentationsschicht des Moduls in Form des Maskenarbeitsbereiches ausgebildet ist. Den Steuerelementen des Maskenarbeitsbereiches werden Datenobjekte zugeordnet, die Werte der Datenobjekte befinden sich jedoch in einem Datencontainer, welcher keine Informationen über die zugehörigen Steuerelemente beinhaltet. Auch die Funktionseinheit des Moduls beinhaltet keine Informationen über die Steuerelemente des Vorgangsbearbeitungsmoduls.

Gemäß der Aufgabe der Erfindung eignet sich das Verfahren insbesondere für die modulartige Erweiterung eines Gesamtsystems, in welchem mehrere Vorgänge eines Retailsystems abgebildet werden. Werden mehrere Vorgangsbearbeitungsmodule verwendet, können diese die gleichen Steuerelemente aufweisen, wobei die vorgangsspezifische Verwendung der Elemente abhängig vom jeweiligen Vorgangsbearbeitungsmodul ist. Dies hat den Vorteil, dass die Verwendung der Steuerelemente verändert werden kann, ohne dass die Benutzeroberfläche umprogrammiert werden muss.

Die Verwendung der Steuerelemente ist ferner nicht in der Funktionseinheit oder dem Datencontainer enthalten, sondern wird über eine jeweilige Konfigurationsdatei bei jedem Start eines Vorgangsbearbeitungsmoduls eingelesen. Die Verwendung der Steuerelemente und die Steuerung des Maskenflusses können somit durch eine einfache Veränderung der Konfigurationsdateien geändert werden, ohne dass die Funktionseinheit oder der Datencontainer umprogrammiert werden müssen. Dies hat den Vorteil, dass die Logik zur Abbildung eines Prozesses nicht verändert werden muss, wenn sich die Benutzeroberfläche ändert, so dass beispielsweise ein Programmierer für die Benutzeroberfläche keine Kenntnis über die Logik der Programmierung des Vorgangs haben muss. Eine Benutzeroberfläche kann daher in Form von Steuerelementen und zugeordneten Datenobjekten über ein einfaches Anwendungsprogramm mit verschiedenen Tools erstellt werden, wobei das Programm die entsprechende XML-Datei erzeugt.

Die Verwendung einer Darstellungskomponente dient insbesondere zur Bildung einer Abstraktionsebene zwischen den GUI-Steuerelementen der Benutzeroberfläche und einem Programmcode. Erfolgt auf der Benutzeroberfläche beispielsweise die Eingabe eines Wertes, wird dies zwar registriert, der Vorgang ist jedoch nicht direkt mit einem Programmcode verbunden. Auch bei der Betätigung eines Schaltelementes auf der Benutzeroberfläche werden damit verbundene Operationen aktiviert, die jedoch keine direkte Verbindung zu einem Programmcode haben. Dies hat den Vorteil, dass dadurch die GUI-Steuerelemente austauschbar sind, ohne dass die Konfigurationsdateien eines Vorgangsbearbeitungsmoduls geändert werden müssen.

Das erfindungsgemäße Verfahren und die zugehörige Vorrichtung bringen ferner den Vorteil mit sich, dass Vorgaben zur Prüfung von Inhalten eines GUI-Steuerelementes verändert werden können, ohne dass die Funktionseinheit oder das Steuerelement eines Vorgangsbearbeitungsmoduls verändert werden müssen. Soll beispielsweise die Maximallänge eines einzugebenden Wertes in einem GUI-Steuerelement reduziert werden, muss lediglich die Datencontainer-Konfigurationsdatei verändert werden, in welcher diese Vorgaben festgelegt werden. Herkömmliche Verfahren verwenden beispielsweise eine direkte Bindung (binding) zwischen einem GUI-Element und einem Datenobjekt, was dazu führt, dass die Änderung von Wertvorgaben eine Veränderung der Bindung erfordert. Auch die Änderung eines Steuerelementes beispielsweise von einem Textfeld in eine Schaltfläche (Button) erfordert herkömmlicherweise die Anpassung der Bindung. Dies ist jedoch mit dem erfindungsgemäßen Aufbau ebenfalls durch eine Veränderung der Datencontainer-Konfigurationsdatei eines Vorgangsbearbeitungsmoduls möglich, ohne dass die Funktionseinheit oder ein Maskenarbeitsbereich verändert werden müssen.

Die durch die Erfindung realisierte Trennung von Steuerelementen einer Benutzeroberfläche von einem Programmcode hat ferner den Vorteil, dass der Inhalt einer extern erzeugten Datenquelle eingespeist und mit einem Vorgangsbearbeitungsmodul verarbeitet werden kann. Die Datenquelle kann über eine Schnittstelle eingespeist werden und die Datenobjekte eines Maskenarbeitsbereiches eines Vorgangsbearbeitungsmoduls können befüllt werden, als ob die Werte der Datenquelle von einem Vorgangsbearbeitungsmodul erfasst worden wären. Dabei ist keine reale Befüllung von Feldern auf einer Benutzeroberfläche erforderlich, wie es bei herkömmlichen Verfahren der Fall ist. Da direkt hinter den Steuerelementen kein Programmcode steht, welcher eingegebene Werte oder Funktionsbefehle verarbeitet, sondern die Zuordnung der Steuerelemente zu Datenobjekten und die Verarbeitung der Daten von den GUI-Controls getrennt ist, können die Steuerelemente eines Maskenarbeitsbereiches durchlaufen und die zugeordneten Datenobjekte befüllt werden, ohne dass eine reale Manipulation von Steuerelementen auf einer Benutzeroberfläche erforderlich ist.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt
- Fig. 1: eine schematische Darstellung eines besonders bevorzugten Ausführungsbeispiels der erfindungsgemäßen Vorrichtung; und
- Fig. 2: eine schematische Darstellung eines Computersystems mit mehreren Vorgangsbearbeitungsmodulen.

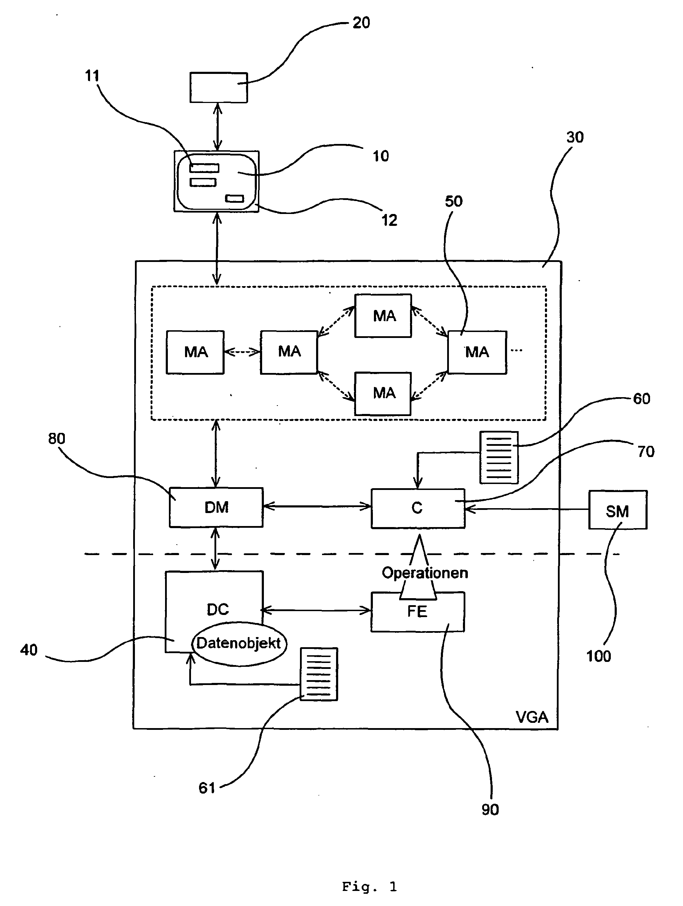

In der Fig. 1 ist schematisch ein besonders bevorzugtes Ausführungsbeispiel der erfindungsgemäßen Vorrichtung und der zugehörigen erfindungsgemäßen Verfahrensabläufe dargestellt. Weitere vorteilhafte Ausführungsformen der Erfindung sollen anhand dieser Darstellung erläutert werden.

In der Fig. 1 ist ein Vorgangsbearbeitungsmodul 30 dargestellt, das im Folgenden auch mit VGA bezeichnet wird. Das Vorgangsbearbeitungsmodul bildet elektronisch einen Vorgang oder Geschäftsprozess ab, welcher von dem Vorgangsbearbeitungsmodul abgewickelt wird. Bei den Vorgängen handelt es sich beispielsweise um Transaktionen innerhalb eines Retailsystems, welche im Bereich des Finanz-, Versicherungs-, und Logistikwesens eingesetzt werden. Unter Transaktionen können neben Vorgängen mit einem eindeutigen Anfang und einem eindeutigen Ende, die entweder vollständig oder gar nicht ausgeführt werden, auch statusunabhängige Abfragen verstanden werden. Das Vorgangsbearbeitungsmodul dient insbesondere zur Sammlung aller erforderlichen Daten für einen Vorgang. Das Vorgangsbearbeitungsmodul 30 ist auf einem Computermittel installiert, das in Verbindung mit einer Benutzeroberfläche 10 steht. Die Benutzeroberfläche befindet sich auf einem Anzeigemittel 12. Bei dem Anzeigemittel kann es sich beispielsweise um einen Computermonitor, ein Automatendisplay, das Display eines Mobiltelefons oder eine Website handeln.

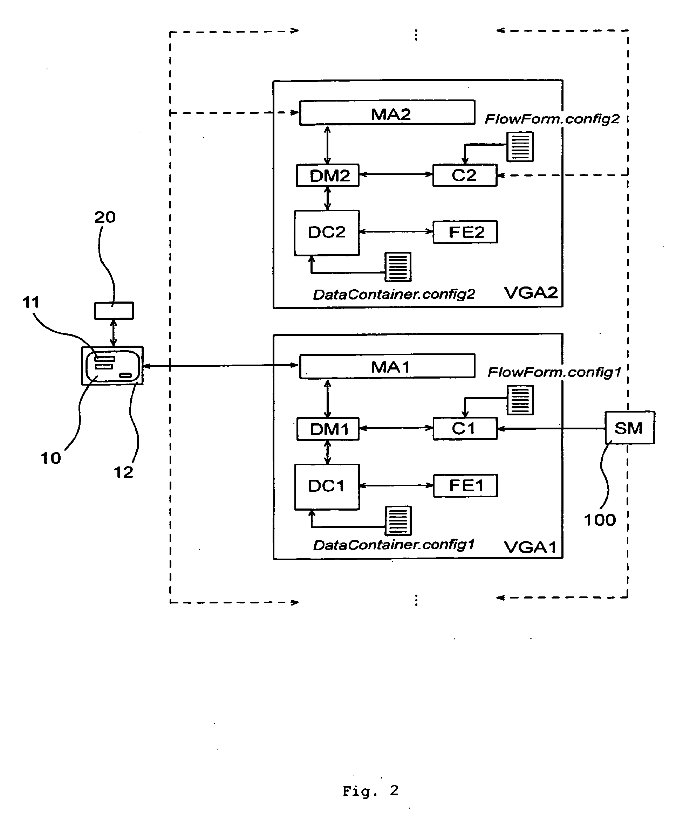

Auf dem Computermittel sind vorzugsweise mehrere Vorgangsbearbeitungsmodule installiert. Dies ist schematisch in Fig. 2 dargestellt, in welcher zwei von mehreren Vorgangsbearbeitungsmodulen mit VGA1 und VGA2 bezeichnet sind. Die Vorgangsbearbeitungsmodule können sich dabei im Frontend oder im Backend eines Gesamtsystems aus mehreren Komponenten befinden. Vorzugsweise ist das VGA im Frontend angeordnet. Bei einem durch das Modul abgebildeten Vorgang handelt es sich beispielsweise um eine Transaktion, die von einem Benutzer 20 an einer graphischen Benutzeroberfläche 10 in Verbindung mit dem jeweiligen Vorgangsbearbeitungsmodul 30 abgewickelt wird. Der Benutzer kann beispielsweise ein Mitarbeiter in einer Filiale sein, welcher den Vorgang für einen Kunden durchführt. Der Benutzer kann ferner der Kunde selbst sein, welcher an einem Automaten eine Transaktion tätigt.

Vorzugsweise handelt es sich bei dem Gesamtsystem, in welches die Vorgangsbearbeitungsmodule integriert sind, um ein modulares System, in welchem die Vorgänge bis auf kleinste Funktionseinheiten unterteilt sind. Daher kann ein Vorgangsbearbeitungsmodul auch einen Prozess abbilden, welcher Bestandteil mehrerer anderer Vorgangsbearbeitungsmodule ist. Beispielsweise kann ein VGA das Einscannen eines Barcodes, die Erfassung von Kundendaten oder die Berechnung eines Wertes abbilden. Diese Einzelprozesse können als Module von anderen Vorgangsbearbeitungsmodulen aufgerufen werden, so dass sie nur einmalig implementiert werden müssen. Für jedes Vorgangsbearbeitungsmodul und damit für jeden Vorgang wird eine Benutzeroberfläche bereitgestellt, wobei der modulare Aufbau den Vorteil hat, dass bei einer Veränderung des jeweiligen Einzelprozesses die Benutzeroberfläche ebenfalls nur einmalig in dem betreffenden Vorgangsbearbeitungsmodul verändert werden muss.

Das Vorgangsbearbeitungsmodul 30 steht über das verwendete Computermittel und ein Anzeigemittel 12 in Verbindung mit der graphischen Benutzeroberfläche 10, die mehrere Steuerelemente 11 aufweist. Bei den Steuerelementen handelt es sich beispielsweise um Schaltflächen oder Eingabefelder, die eigene Funktionalitäten wie beispielsweise Einfeld- oder Mehrfeldplausibilitäten enthalten können. Die Benutzeroberfläche befindet sich in Form eines Anwendungsrahmens vorzugsweise auf einem Client, bei dem es sich um eine Anwendung in einem Netzwerk handelt, welche die Dienste eines oder mehrerer Server in Anspruch nimmt. Der Client initialisiert beim Start den Anwendungsrahmen der graphischen Benutzeroberfläche. Der Client kann dabei eine Plattform mit weiteren Komponenten eines Frameworks wie Datenbanken, Abrechnungsmodule etc. nutzen. In einem besonders bevorzugten Ausführungsbeispiel der Erfindung kann eine als CARBON(Component ARchitecture for Business OptimizatioN)-Plattform bezeichnete Plattform genutzt werden, welche als Software realisiert und auf Datenverarbeitungsanlagen installiert ist. Das Framework beinhaltet dabei die Laufzeitbibliothek der Plattform, welche auch als Common Language Runtime bezeichnet wird (CLR). Nach der Initialisierung des Anwendungsrahmens durch den Client initialisiert und startet dieser zweckmäßigerweise den Kern des Frameworks. Vor der Initialisierung des Kerns können Prüfungen durchgeführt werden, welche beispielsweise die Integrität des Programms betreffen. Ferner kann überprüft werden, ob es sich um einen Start oder einen Recovery-Fall handelt, welcher durch einen Abbruch eines Vorganges erzeugt wurde.

Das Vorgangsbearbeitungsmodul 30 befindet sich vorzugsweise ebenfalls auf dem Client. Dabei können auf dem Client mehrere verschiedene Versionen eines Vorgangsbearbeitungsmoduls installiert sein. Beim Starten des Vorgangsbearbeitungsmoduls wird automatisch die Version mit der höchsten Versionsnummer herangezogen. Um dies zu ermöglichen, sind die Vorgangsbearbeitungsmodule zweckmäßigerweise in einer bestimmten Weise in einem Vorgangsbearbeitungsmodul-Verzeichnis abgelegt worden.

Die graphische Benutzeroberfläche (GUI) ist vorzugsweise als Assistent-basiertes System konzipiert, bei dem von einem Anwender 20 im Laufe eines Vorganges mehrere Masken in einer vorgegebenen Reihenfolge abgearbeitet werden. Dies hat den Vorteil, dass für einen Vorgang benötigte Daten vollständig erfasst werden und ferner sichergestellt ist, dass der Anwender beim Abschluss des Vorganges alle möglichen Optionen zu Gesicht bekommen hat.

In einem bevorzugten Ausführungsbeispiel der Erfindung ist das Vorgangsbearbeitungsmodul ebenfalls an ein Framework angeschlossen, das vorzugsweise objektorientiert und komponentenorientiert ausgebildet ist. Bei dem Framework handelt es sich um ein API (Application Programming Interface), welches die Funktionalitäten bereitstellt, Clients für verschiedene Assistent-basierte Vorgangsarten zu erstellen. Die von dem Framework zur Verfügung gestellten Funktionalitäten umfassen beispielsweise Kernfunktionalitäten wie das Starten/Beenden des Clients oder der Vorgangsbearbeitungsmodule. Das Framework stellt beispielsweise ein gemeinsames Startmodul 100 zum Starten der Vorgangsbearbeitungsmodule bereit. Ferner unterstützt das Framework die Vorgangsbearbeitungsmodule bei Datenhaltung und Ablaufsteuerung und stellt Komponenten für den Zugriff auf Daten oder zum Drucken bereit. Darüber hinaus werden Basisfunktionalitäten wie die Protokollierung oder die Fehlerbehandlung bereitgestellt.

Als vollständig objektorientierte Programmiersprache innerhalb des Frameworks kann beispielsweise C# verwendet werden. Die objektorientierte Programmierung sieht Objekt-Klasse-Beziehungen vor, wobei eine Klasse ein abstrakter Oberbegriff für Objekte ist, die eine gemeinsame Struktur und/oder ein gemeinsames Verhalten aufweisen. Ein Objekt ist dabei ein zur Laufzeit eines Programms vorhandenes Exemplar einer Klasse, für das Speicherplatz zur Verfügung gestellt wird. Ein Objekt ist eine Instanz einer Klasse. Eine Klasse und damit ihre Objekte werden durch Attribute, Operationen, Zusicherungen und Beziehungen charakterisiert, wobei die Klassen die Attribute und Methoden zu einer Einheit zusammenfassen. Die Attribute sind standardmäßig nur über Methoden der Klasse zugänglich, so dass eine Kapselung oder Zugriffsbeschränkung vorliegt. Eine Klasse kann ferner keine, eine oder mehrere explizite Schnittstellen besitzen und die Kapselung trennt die Implementierung von der Schnittstelle.

In einem besonders bevorzugten Ausführungsbeispiel der Erfindung ist das Vorgangsbearbeitungsmodul 30 kein eigenständiges Programm, sondern benötigt zu seiner Ausführung die Infrastruktur eines Clients. Es handelt sich jedoch um eine aktive Komponente, welche beispielsweise das eigene Pausieren und/der den Start anderer Vorgangsbearbeitungsmodule bewirken kann.

Das Vorgangsbearbeitungsmodul 30 weist verschiedene Komponenten auf, welche vorzugsweise unabhängig oder abhängig von der Benutzeroberfläche 10 ausgeführt sind. Erfindungsgemäß ist dabei die Steuerung der Benutzeroberfläche unabhängig von Einheiten ausgeführt, welche die fachliche Funktionalität des Vorgangs abbilden und durchführen. Ferner können einzelne Bereiche im Frontend auf dem Client angeordnet sein, während sich andere Bereiche im Backend oder in einem Umsystem befinden können. Die zu einem Vorgangsbearbeitungsmodul gehörende Funktionseinheit 90 ist erfindungsgemäß unabhängig von der graphischen Benutzeroberfläche ausgebildet. In dieser Funktionseinheit befinden sich somit keine Definitionen und Navigationen von Masken, da sonst bei einer Veränderung der Benutzeroberfläche eine Anpassung der Funktionseinheit erfolgen müsste. Ferner hat die Funktionseinheit keinen Zugriff auf GUI-abhängige Instanzen. Werden von dem Vorgangsbearbeitungsmodul Benutzeroberflächen beispielsweise in Form von Web-Frontends unterstützt, kennt der zugehörige Server den Client nur solange, bis eine Anfrage des Clients beantwortet ist. Die Funktionseinheit würde in diesem Fall zweckmäßigerweise im Backend betrieben.

Die Funktionseinheit 90 liegt in einem besonders bevorzugten Ausführungsbeispiel der Erfindung als gekapseltes *BusinessObjekt* vor. Ein Vorgangsbearbeitungsmodul ist dabei genau einem logischen *BusinessObjekt* zugeordnet, das wiederum aus mehreren Klassen mit Verweisen auf Komponenten bestehen kann. Die Aufgabe der Funktionseinheit 90 liegt in der Bereitstellung der fachlichen Funktionalität zur Durchführung eines Vorganges. Durch Aktionen eines Benutzers 20 an der graphischen Benutzeroberfläche 10 wird das *BusinessObjekt* angesprochen. Bei der Aktion an der Benutzeroberfläche kann es sich beispielsweise um das Aktivieren einer Schaltfläche oder die Änderung eines Wertes in einem Feld handeln. Dabei dienen Operationen als Bindeglied zwischen der Funktionseinheit 90 und den GUI-Controls 11 der Benutzeroberfläche 10. Als Operationen werden dabei Commands wie beispielsweise NavigationCommands, GenericCommands oder VGAStartCommands bezeichnet.

Vorzugsweise werden nicht alle Operationen eines Vorgangsbearbeitungsmoduls in einer Klasse implementiert. Im Sinne einer objektorientierten Kapselung verschiedener Aktionen in Klassen hat es sich als vorteilhaft erwiesen, jede Operation in einer eigenen Klasse zu implementieren. Als Ausnahme können jedoch logisch gleiche Aktionen angesehen werden. Beispielsweise kann der Anwender beim Drücken eines "Weiter"- und des "Cancel"-Buttons gefragt werden, ob diese Aktion wirklich durchgeführt werden soll. In diesem Fall handelt es sich tatsächlich um eine gleiche Aktion, die in einer gemeinsamen Klasse, jedoch mit unterschiedlichen Operationsnamen zum Einsatz kommt.

Das VGA weist ferner einen Datencontainer 40 auf. Der Datencontainer ist ebenfalls unabhängig von der Benutzeroberfläche 10 ausgebildet. Der Datencontainer ist vorzugsweise nach dem Siting-Prinzip einer Container-Site Architektur ausgebildet, wodurch eine einfache Entwicklung ermöglicht wird und Weiterentwicklungen unterstützt werden. Der Datencontainer bildet dabei eine abstrakte generische Schnittstelle von dem Vorgangsbearbeitungsmodul zu Kernkomponenten des Frameworks. Das Framework kommuniziert vorzugsweise über ein Interface *IVGAEntrypoint* mit dem Datencontainer.

Der Datencontainer 40 ist die zentrale Sammelstelle von Daten innerhalb eines Vorgangsbearbeitungsmoduls 30 und ist somit für die Speicherung des Zustandes des VGA zuständig. Alle relevanten Daten, die in dem VGA anfallen, werden im Datencontainer abgelegt. Dabei kann es sich um von einem Benutzer eingegebene oder vom System ermittelte Daten handeln. Die Daten werden hierbei in Form von Datenobjekten abgelegt, d.h. jedes Datenelement ist einem Datenobjekt zugehörig und kann nur über diese gelesen, geschrieben und geändert werden. Es hat sich als besonders vorteilhaft erwiesen, jedem Vorgangsbearbeitungsmodul 30 einen eigenen Datencontainer 40 zuzuweisen. Dies hat gegenüber der Verwendung einer allgemeinen Datenbank für alle Vorgangsbearbeitungsmodule den Vorteil, dass verschiedene Zusatzfunktionen durchgeführt werden können. Beispielsweise ist beim Abbruch eines Vorgangsbearbeitungsmoduls ein einfacher Neustart in dem Zustand möglich, in welchem der Abbruch stattfand. Da der Zustand des Vorgangsbearbeitungsmoduls vollständig im Datencontainer abgebildet ist, kann der Zustand beim Neustart rekonstruiert und weitergeführt werden, wobei lediglich ein geringer Datenbestandteil gespeichert und rekonstruiert werden muss.

Welche Datenobjekte im Datencontainer 40 existieren und mit welchen Werten diese gefüllt sind, wird erfindungsgemäß in einer Datencontainer-Konfigurationsdatei 61 angegeben. Diese Datei liegt im Verzeichnis des VGA und entspricht einem definierten Schema. Bei der Konfigurationsdatei handelt es sich vorzugsweise um eine Datei im XML-Format. Beim Instanziieren des Datencontainers wird diese Datei geladen, die konfigurierten Datenobjekte werden erstellt und mit den angegebenen Start-Werten initialisiert. Die konfigurierten Datenobjekte stehen dann zur Verfügung und können an ein Steuerelement 11 der graphischen Benutzeroberfläche 10 gebunden und/oder durch die im *BusinessObjekt* definierte Programmlogik gelesen, geschrieben und geändert werden. Ist der Datencontainer instanziiert, wird diese Instanz dem Konstruktor des *BusinessObjekts* übergeben. Dadurch kann das *BusinessObjekt* auf die Datenobjekte des Datencontainers zugreifen. Der Datencontainer existiert jedoch prinzipiell unabhängig vom *BusinessObjekt,* da dieses erzeugt und wieder vernichtet werden kann.

Ein wesentlicher Bestandteil eines Vorgangsbearbeitungsmoduls 30 ist ferner wenigstens ein Maskenarbeitsbereich 50, der abhängig von der Benutzeroberfläche ausgebildet ist. Beinhaltet ein Vorgangsbearbeitungsmodul einen Maskenfluss aus mehreren Masken, die nacheinander durchlaufen werden, liegen mehrere Maskenarbeitsbereiche vor. Diese Maskenarbeitsbereiche 50 werden im Folgenden auch als VGA-Workspaces bezeichnet, wobei ein Workspace ein technisches Synonym für eine Maske darstellt. Ein VGA-Workspace bildet das Fundament der Steuerelemente 11 (GUI-Controls) der Benutzeroberfläche 10. Bei einem VGA-Workspace handelt es sich um ein spezielles Interface zur Unterstützung der Kommunikation zwischen den Steuerelementen 11 und einer Darstellungskomponente 80, wobei die Darstellungskomponente wiederum in Verbindung mit dem Datencontainer 40 bzw. der Funktionseinheit 90 steht. Wird ein Vorgang eines Vorgangsbearbeitungsmoduls über die Benutzeroberfläche 10 abgewickelt, beinhaltet dies einen Maskenfluss mit verschiedenen Masken, wobei jede Maske durch einen VGA-Workspace beschrieben ist. Jede Maske wird von einer Klasse implementiert, die sich vom VGA-Workspace ableitet. Wird ein Maskenfluss für ein Vorgangsbearbeitungsmodul programmiert, werden die Eigenschaften dieser Klasse entsprechend der Fachlogik eingestellt. In der Fig. 1 sind die verschiedenen VGA-Workspaces 50 für den Maskenfluss des Vorgangsbearbeitungsmoduls 30 beispielhaft mit einem nicht-linearen Maskenfluss dargestellt.

Die Verbindung zwischen den Maskenarbeitsbereichen 50 und der Funktionseinheit 90 bzw. dem Datencontainer 40 wird durch eine Darstellungskomponente 80 hergestellt. Die Darstellungskomponente ist dazu als Zwischenschicht zwischen der Funktionseinheit bzw. dem Datencontainer und den VGA-Workspaces ausgebildet. Die Darstellungskomponente wird im Folgenden auch als Presenter bezeichnet und stellt eine Abstraktionsebene dar. Der Presenter dient der Kommunikation zwischen den Steuerelementen 11 der aktuellen Maske und den zugehörigen Datenobjekten des Datencontainers, wobei der Presenter jedoch nicht auf GUI-Controls zugreift. Der Presenter stellt ferner eine Infrastruktur für die Ausführung von Operationen der Funktionseinheit bereit.

Zu einem Vorgangsbearbeitungsmodul gehören vorzugsweise mindestens drei Dateien. Bei der ersten Datei handelt es sich um ein Assembly *VGAxxxx.dll* des Vorgangsartenmoduls, in welchem die gesamte Vorgangsbearbeitungslogik kodiert sein kann. Das Assembly muss jedoch zumindest die zum Start eines Vorgangsbearbeitungsmoduls notwendigen Klassen implementieren. Die zweite Datei *FormFlow.config* beinhaltet die Konfiguration für die Operationen und den Maskenablaufplan des Vorgangsbearbeitungsmoduls. Die dritte Datei *DataContainer.config* enthält die Konfiguration für die von dem Vorgangsbearbeitungsmodul verwendeten Daten und deren Start-Werte.

Die Kommunikation zwischen den Schichten erfolgt in einem bevorzugten Ausführungsbeispiel der Erfindung über Datenobjekte. Vorzugsweise besitzen alle GUI-Controls 11 die Eigenschaften *NameAspect* und *ValueAspect*. Die *NameAspect-*Eigenschaft verweist hierbei auf das namensgebende Datenobjekt, während die *ValueAspect*-Eigenschaft auf das wertgebende Datenobjekt verweist. Je nach Control werden ein oder zwei Datenobjekte eingebunden. Wird nur ein Datenobjekt eingebunden, wird automatisch die jeweils andere Eigenschaft auf denselben Eigenschaftswert gesetzt. Ferner können jedoch auch standardmäßige GUI-Controls ohne zugeordnete Datenobjekte verwendet werden.

Das Attributieren der Methoden im *BusinessObjekt* findet mittels Klassen statt. Das Attributieren der Methoden im *BusinessObjekt* ermöglicht die Unabhängigkeit der Namen dieser Methoden von den Namen der Datenobjekte bzw. der Operationen. Eine attributierte Methode kann zu mehreren Datenobjekten oder Operationen aufgerufen werden. Die Konstruktoren der Attribute-Klassen können als Parameter konstante Werte entgegennehmen. Der Presenter ruft bei der Validierung - der Reaktion auf eine Änderung eines Datenobjektes und dem Ausführen einer Operation - jeweils eine zentrale virtuelle Methode am BusinessObjekt auf.

Ein VGA-Workspace verwaltet eine Liste der auf seiner Maske angeordneten GUI-Controls und der jeweils zugeordneten Datenobjekte des Datencontainers 40. Ein Datenobjekt repräsentiert einen Wert, der im Datencontainer gehalten wird, sowie einige ergänzende Parameter. Einem Steuerelement 11, das einen bestimmten Wert darstellen soll, wird zum Designzeitpunkt daher nur das entsprechende Datenobjekt des Datencontainers zugewiesen. Zur Laufzeit des Systems wird aufgrund dieses Datenobjektes eine Beziehung des GUI-Controls zu dem darzustellenden Datenobjekt hergestellt, der im Datencontainer gehalten wird. Ändert sich innerhalb des *BusinessObjekts* ein Wert, der auf der Benutzeroberfläche dargestellt werden soll, dann wird das betreffende Datenobjekt, das den Wert enthält, über den Presenter an die VGA-Maske weitergeleitet. Dies gilt ebenso für alle GUI-Controls, welche dieses Datenobjekt darstellen.

Eine andere Form der oben genannten Kommunikation findet statt, wenn durch eine Benutzereingabe eine Wertänderung auf der Benutzeroberfläche stattgefunden hat. In diesem Fall muss das durch die Eingabe aktualisierte GUI-Control den neuen Wert vorzugsweise nach einer internen Plausibilitätsprüfung an das *BusinessObjekt* propagieren. Nach erfolgreicher Validierung auf der Operationenebene und dann auf der Ebene der Funktionseinheit wird der neue Wert im betreffenden Datenobjekt des Datencontainers gespeichert.

Die Prüfung eingegebener Werte erfolgt somit nicht auf der GUI-Ebene, sondern im Bereich des Datencontainers. Beispielsweise ist es für die GUI-Controls und die VGA-Workspaces nicht erforderlich, dass diese eine Überprüfung von Eingabewerten beispielsweise auf die Zeichenlänge oder einen Datumsbereich beinhalten. Darf ein Eingabewert beispielsweise nur eine Länge von 15 Zeichen haben, wird dies nicht durch die GUI-Control überprüft, sondern der Wert wird dem entsprechenden Datenobjekt im Datencontainer zugeordnet. Anhand der Eigenschaften des Datenobjektes wird überprüft, ob der Wert die durch den Datencontainer gesetzte Voraussetzung von 15 Zeichen erfüllt oder nicht. Ist dies der Fall, wird der Wert angenommen und im Datencontainer gespeichert. Wird die Voraussetzung nicht erfüllt, erfolgt eine Meldung an den Benutzer 20. Die Trennung der GUI-Controls von der Funktionseinheit und dem Datencontainer hat hierbei den Vorteil, dass die GUI-Controls und damit die Benutzeroberfläche nicht umprogrammiert werden müssen, falls sich beispielsweise die Voraussetzung für einen Eingabewert ändern sollen. In diesem Fall wird lediglich die Datencontainer-Konfigurationsdatei 61 *DataContainer.config* geändert, mit welcher der Datencontainer initiiert und instanziiert wird.

Das Vorgangsbearbeitungsmodul 30 kann vorzugsweise auf mehrere Arten gestartet werden. Beispielsweise kann der Start über einen Menü-Button auf der Benutzeroberfläche oder aus einem anderen Vorgangsbearbeitungsmodul heraus gestartet werden. Für den Start eines Vorgangsbearbeitungsmoduls ist ein Startmodul 100 zuständig. Das Startmodul kann auch als *ContextManager* bezeichnet werden, der Teil eines *ApplicationManagers* des Frameworks ist. Der Start wird vorzugsweise durch eine Klasse *VGABase* unterstützt, welche alle Funktionalitäten zum Starten eines Vorgangsbearbeitungsmoduls beinhaltet. Die Klasse *VGABase* stellt eine abstrakte Basisklasse für alle Datencontainer-Klassen dar. Sie implementiert insbesondere die *IVGAEntryPoint*-Schnittstelle.

Beim Start eines VGA instanziiert und initialisiert das Startmodul 100 den Datencontainer 40 und die Funktionseinheit 90 des betreffenden Vorgangsbearbeitungsmoduls. Ferner wird ein Controller 70 instanziiert, initialisiert und gestartet. Der Controller wird dabei von der Klasse VGABase erzeugt und initialisiert. Der Controller 70 hat die Aufgabe, die Abfolge der verschiedenen VGA-Workspaces 50 zu steuern. Der Controller sorgt ferner dafür, dass ein Vorgangsbearbeitungsmodul korrekt gestartet und beendet wird und die jeweils richtigen VGA-Workspaces angezeigt werden.

Beim Initialisieren des Datencontainers 40 werden die Datenobjekte angelegt und mit den Start-Werten initialisiert, welche aus einer Datencontainer-Konfigurationsdatei 61 *DataContainer.config* ausgelesen werden. Die Datencontainer-Konfigurationsdatei 61 enthält die Konfiguration der von dem Vorgangsbearbeitungsmodul verwendeten Daten und deren Start-werte. Beim Initialisieren des Controllers 70 wird ein Maskenablaufplan des Vorgangsbearbeitungsmoduls 30 erstellt. Dazu liest der Controller die Konfiguration des Maskenflusses aus einer Controller-Konfigurationsdatei 60 *FormFlow.config* aus. Dazu kann eine Klasse *FormFlowReader* verwendet werden, welche den Maskenablaufplan des Vorgangsbearbeitungsmoduls aus der *FormFlow. config* ausliest. Die Klasse *FormFlowReader* wird beim Start eines VGA vom Controller aufgerufen. Die Controller-Konfigurationsdatei 60 beinhaltet neben der Konfiguration des Maskenablaufplanes auch die Operationen des Vorgangsbearbeitungsmoduls.

Die Controller-Konfigurationsdatei 60 liegt vorzugsweise im XML-Format vor und enthält Informationen über den Maskenablaufplan eines Vorgangsbearbeitungsmoduls, sowie über die zu dem jeweiligen Vorgangsbearbeitungsmodul gehörenden Operationen. Die Konfiguration wird gegen ein Schema validiert und bei erfolgreicher Validierung erstellt der Controller den Maskenablaufplan. Daraufhin erzeugt der Controller eine Darstellungskomponente 80 und initialisiert diese. Bei jedem Maskenwechsel wird die Darstellungskomponente vom Controller neu initialisiert. Ferner ermittelt der Controller den ersten VGA-Workspace in der Maskenreihenfolge, initialisiert diesen und zeigt ihn an. Der Controller verwendet für die Maskennavigation einen Stapel, der beim Start eines Vorgangsbearbeitungsmoduls erzeugt wird. Die Maske des ersten VGA-Workspaces wird als erste auf den Stapel gelegt. Falls ein Vorgangsbearbeitungsmodul auf der letzten Maske gestartet werden soll, so werden alle Masken auf den Stapel gelegt, so dass die letzte Maske zur obersten Maske auf dem Stapel wird. Der VGA-Workspace 50 initialisiert daraufhin die Steuerelemente 11 auf seiner Oberfläche, wobei er über die Darstellungskomponente 80 auf die Werte in den zugeordneten Datenobjekten des Datencontainers 40 zugreift.

Bei der Initialisierung geht der VGA-Workspace alle auf seiner Oberfläche angeordneten GUI-Controls durch und ermittelt für jedes Control mit Hilfe der Eigenschaft *AspectName*, welchem Datenobjekt es zugeordnet ist. Anschließend ruft der VGA-Workspace den aktuellen Wert jedes einzelnen Datenobjektes über den Presenter ab. Dies geschieht beispielsweise über eine Methode *GetAspect()* am Presenter, der der Datenobjektname als Parameter übergeben wird. Daraufhin delegiert der Presenter den Methodenaufruf an das *BusinessObjekt,* welches das entsprechende Datenobjekt aus dem Datencontainer abruft.

Ist für ein Vorgangsbearbeitungsmodul 30 ein linearer Maskenfluss vorgesehen, kann das VGA auf der ersten oder der letzten Maske gestartet werden. Ist ein nicht-linearer Maskenfluss vorgesehen, wird das VGA standardmäßig auf der ersten Maske gestartet, da im nicht-linearen Maskenfluss der Rückweg nicht eindeutig definiert ist. Auf welche Maske innerhalb des Maskenflusses navigiert wird, wird durch Navigationsbefehle in den Operationen festgelegt. Die Navigationsbefehle sind in der Controller-Konfigurationsdatei 60 enthalten und sind somit veränderbar. Dabei wird jedoch nicht direkt angegeben, auf welche Maske navigiert werden soll, sondern nur welcher Weg von der aktuellen Maske zu wählen ist, wodurch sich die Folgemaske implizit ergibt. Alle möglichen Wege müssen in der Controller-Konfigurationsdatei 60 *FormFlow.config* festgelegt sein. Durch diese Vorgehensweise ist es im Nachhinein möglich, Masken aus dem Maskenfluss zu entfernen (Ändern der Wege in der Konfiguration), ohne unbedingt die Operationen der Funktionseinheit anpassen zu müssen.

Die einzelnen Wege zu der nächsten Maske werden beispielsweise mit IDs (Zeichenketten) versehen. Die ID "next" wird dabei beispielsweise durch das Framework definiert und gibt den Standardweg beim Verlassen einer Maske an. Soll dieser Weg beschritten werden, so geschieht dies durch diesen Standard-Navigationsbefehl automatisch, ohne dass ein Befehl implementiert werden muss. Eine Implementierung ist daher nur erforderlich, wenn einer von mehreren Wegen beschritten werden soll.

Mittels Navigationsbefehle navigiert der Controller 70 zum nächsten oder vorherigen VGA--Workspace. Wenn der Controller mit Hilfe des Ablaufplans die nächste Maske ermittelt, legt er sie auf den Stapel. Bei einem umgekehrten Maskenwechsel in die Rückwärts-Richtung nimmt der Controller die oberste Maske vom Stapel. Ist also die erste Maske die aktuelle, liegen keine Masken auf dem Stapel.

Liegt ein nicht-linearer Maskenablauf vor, kann es Masken geben, die über mehrere alternative Nachfolgemasken verfügen. Die Klasse *VGAController* ist beispielsweise dafür zuständig, ausgehend von dem aktuellen VGA-Workspace den folgenden VGA-Workspace zu identifizieren, ihn zu erzeugen, zu initialisieren und anzuzeigen. Dabei wird bei jedem Maskenwechsel der Presenter vom Controller erzeugt und diesem wird der aktuelle VGA-Workspace mit den zugehörigen Operationen übergeben.

Damit der Presenter Methoden des *BusinessObjekts* aufrufen kann, gibt der Controller die Referenz auf das *BusinessObjekt* an den Presenter weiter. Der aktuelle Status des Clients kann in Form eines technischen oder fachlichen Checkpoints weggeschrieben werden. Damit ein Vorgangsbearbeitungsmodul gesichert und wiederhergestellt werden kann, muss sichergestellt sein, dass alle Daten, die innerhalb des VGA von Belang sind, in einem Datenobjekt abgelegt sind. Dadurch ist gewährleistet, dass bei dem Wiederaufsatz auf einem bestimmten Checkpoint die Werte innerhalb der Datenobjekte wiederhergestellt werden. Dies wird durch die Unterstützung von Serialisierung erreicht. Unter einer Serialisierung versteht man eine sequentielle Abbildung von Objekten auf eine externe Darstellungsform. Ziel ist das Erreichen von Persistenz für das Objekt. Ein Objekt kann zum Beispiel serialisiert werden, indem der komplette Zustand des Objektes, inklusive aller Objekte die es referenziert, in einen Datenstrom umgewandelt und auf ein Speichermedium geschrieben wird. Der Zustand und Inhalt des Datencontainers kann so jederzeit in einen binären Datenstrom umgewandelt und persistiert werden. Somit können alle Daten eines VGA, die in einem Datenobjekt und damit im Datencontainer vorhanden sind, im Falle eines Systemabsturzes wiederhergestellt werden.

Ein Vorgangsbearbeitungsmodul kann vorzugsweise zu jedem Zeitpunkt vom Benutzer 20 abgebrochen werden. Dies erfolgt beispielsweise über das Betätigen eines Abbrechen-Buttons auf der aktuellen Maske. Im Gegensatz dazu erfolgt das ordnungsgemäße Beenden eines Vorgangsbearbeitungsmoduls nur über den Weiter-Button auf der letzten Maske.

Checkpoints können beispielsweise standardmäßig bei jedem Maskenwechsel in die Vorwärts-Richtung vom Controller weggeschrieben werden. Zusätzlich können an bestimmten Stellen im Maskenarbeitsbereich weitere Checkpoints vorgesehen sein. In einem besonders bevorzugten Ausführungsbeispiel der Erfindung wird ferner bei jedem Maskenwechsel überprüft, ob alle Pflichtfelder der Maske bearbeitet wurden. Die Aktion, mit welcher der Pflichtfeld-Eigenschaft eines Steuerelementes 11 Genüge getan ist, hängt dabei von dem jeweiligen Steuerelement und seinem zugeordneten Datenobjekt ab. Bei erfolgloser Pflichtfeld-Validierung werden die Pflichtfelder vorzugsweise so visualisiert, dass der Benutzer 20 sofort erkennen kann, dass in den betreffenden Feldern noch Eingaben zu tätigen sind.

In einem weiteren besonders bevorzugten Ausführungsbeispiel der Erfindung ist es ferner möglich, eine Befüllung eines Datencontainers eines Vorgangsbearbeitungsmoduls durchzuführen, ohne dass GUI-Elemente einer Benutzeroberfläche real befüllt und abgearbeitet werden müssen. Dies ist beispielsweise vorteilhaft, wenn Vorrichtungen in das Gesamtsystem eingebunden werden, auf denen ein Vorgangsbearbeitungsmodul oder ein Maskenarbeitsbereich nicht lauffähig sind. So ist es möglich, beliebige Vorrichtungen in das Gesamtsystem zu integrieren und von den Vorrichtungen erzeugte Daten zu verarbeiten. Sollen beispielsweise Daten von Automaten verarbeitet werden, auf denen ein Vorgangsbearbeitungsmodul für den durch den Automaten durchgeführten Vorgang nicht installiert ist, erzeugt der Automat eine Datei, welche dem System übermittelt wird. Die Datei kann über eine entsprechende Schnittstelle eingelesen und damit ein Vorgangsbearbeitungsmodul für den betreffenden Vorgang des Automaten gestartet werden. Das Vorgangsbearbeitungsmodul wird durchlaufen und die Datenobjekte des Datencontainers werden automatisch mit Werten der eingespeisten Datei befüllt.

### Bezugszeichenliste:

- 10: Graphische Benutzeroberfläche, GUI
- 11: Steuerelement, GUI-Control
- 12: Anzeigemittel, Monitor
- 20: Benutzer, Anwender
- 30: Vorgangsbearbeitungsmodul, VGA1, VGA2
- 40: Datencontainer, DC
- 41: Datenobjekt
- 50: Maskenarbeitsbereich, MA, VGA-Workspace
- 60: Controller-Konfigurationsdatei
- 61: Datencontainer-Konfigurationsdatei
- 70: Controller, C
- 80: Darstellungskomponente, DM, Presenter
- 90: Funktionseinheit, FE
- 100: Startmodul, SM

## Patentansprüche

1. Verfahren zum rechnergestützten Erzeugen einer graphischen Benutzeroberfläche (10) auf einem Anzeigemittel (12) für eines von mehreren Vorgangsbearbeitungsmodulen (30), wobei die Benutzeroberfläche (10) wenigstens ein Steuerelement (11) aufweist und das vorgangsbearbeitungsmodul (30) mit wenigstens einem weiteren Vorgangsbearbeitungsmodul auf einem Computermittel installiert wird und ein Vorgangsbearbeitungsmodul elektronisch einen Vorgang innerhalb eines Retailsystems abarbeitet, wobei ein Vorgangsbearbeitungsmodul die erforderlichen Daten für den betreffenden Vorgang sammelt,
beinhaltend
folgende Schritte:
- Zuordnen von wenigstens einem Maskenarbeitsbereich (50) mit wenigstens einem Steuerelement (11) zu dem Vorgangsbearbeitungsmodul (30), wobei jedem Steuerelement (11) ein Datenobjekt (41) zugeordnet wird;
- Zuordnen eines Datencontainers (40) mit dem wenigstens einen Datenobjekt (41) zu dem Vorgangsbearbeitungsmodul (30) ;
- Zuordnen einer Funktionseinheit (90) zu dem Vorgangsbearbeitungsmodul (30);
- Hinterlegen wenigstens einer Konfiguration der Darstellung des Maskenarbeitsbereiches (50) in einer zu dem Vorgangsbearbeitungsmodul (30) gehörenden Controller-Konfigurationsdatei (60);
- Hinterlegen einer Konfiguration des wenigstens einen Datenobjekts (41) des Datencontainers (40) und einer Konfiguration der Operationen für die Kommunikation zwischen dem Maskenarbeitsbereich (50), der Funktionseinheit (90) und dem Datencontainer (40) in einer zu dem Vorgangsbearbeitungsmodul (30) gehörenden Datencontainer-Konfigurationsdatei (61);
- Starten des vorgangsbearbeitungsmoduls (30) durch ein Startmodul (100), wobei beim Starten wenigstens ein Controller (70), die Funktionseinheit (90) und der Datencontainer (40) des Vorgangsbearbeitungsmoduls (30) initialisiert werden;
- Einlesen der zu dem Vorgangsbearbeitungsmodul (30) gehörenden Controller-Konfigurationsdatei (60) zur Initialisierung des Controllers (70);
- Einlesen der Datencontainer-Konfigurationsdatei (61) zur Initialisierung des Datencontainers (40);
- Initialisieren einer Darstellungskomponente (80) durch den Controller (70), wobei die Darstellungskomponente (80) eine Verbindung zwischen dem wenigstens einen Maskenarbeitsbereich (50) und dem Datencontainer (40) herstellt;
- Ermitteln und Initialisieren des in der eingelesenen Controller-Konfigurationsdatei (60) hinterlegten Maskenarbeitsbereiches (50) des Vorgangsbearbeitungsmoduls (30) durch den Controller (70);
- Initialisieren des wenigstens einen Steuerelements (11) des Maskenarbeitsbereiches (50);
- Darstellen des wenigstens einen Steuerelements (11) als graphische Benutzeroberfläche auf dem Anzeigemittel (12) zur Interaktion eines Benutzers (20) mit dem Vorgangsbearbeitungsmodul (30); und
- Füllen und/oder Abarbeiten des wenigstens einen Steuerelements (11) des Maskenarbeitsbereiches (50), wobei der Maskenarbeitsbereich (50) über die Darstellungskomponente (80) auf das wenigstens eine Datenobjekt (41) des Datencontainers (40) zugreift, wobei
- über eine Schnittstelle Werte aus einer Datenquelle eingelesen werden, deren Inhalt dem wenigstens einen Datenobjekt (41) des Datencontainers (40) zugeordnet werden können und das wenigstens eine Steuerelement (11) des Maskenarbeitsbereiches (50) gefüllt und/oder abgearbeitet wird, wobei der Maskenarbeitsbereich (50) über die Darstellungskomponente (80) auf das wenigstens eine Datenobjekt (41) des Datencontainers (40) zugreift und das wenigstens eine Datenobjekt (41) automatisch mit Werten der Datenquelle gefüllt wird.

2. Verfahren nach Anspruch 1,
**dadurch gekennzeichnet,**
**dass** dem Vorgangsbearbeitungsmodul (30) ein Maskenablaufplan aus mehreren Maskenarbeitsbereichen (50) zugeordnet und dieser in der Controller-Konfigurationsdatei (60) hinterlegt wird.

3. Verfahren nach Anspruch 1 oder 2,
**dadurch gekennzeichnet,**
**dass** es sich bei der Datenquelle um eine Datei handelt.

4. Verfahren nach einem der Ansprüche 1 bis 3,
**dadurch gekennzeichnet,**
**dass** bei einer Änderung eines Wertes innerhalb der Funktionseinheit (90) eine Weiterleitung des dem Wert zugeordneten Datenobjektes (41) über die Darstellungskomponente (80) an den Maskenarbeitsbereich (50) und damit alle Steuerelemente (11) erfolgt, welche den Wert darstellen.

5. verfahren nach einem oder mehreren der Ansprüche 1 bis 4,
**dadurch gekennzeichnet,**
**dass** bei einer Änderung eines Wertes eines Steuerelementes (11) eine Weiterleitung des Wertes an die Funktionseinheit (90) und den Datencontainer (40) erfolgt, wobei der Wert zu dem Datenobjekt (41) gespeichert wird, welches dem Steuerelement (11) zugeordnet ist.

6. Verfahren nach einem oder mehreren der Ansprüche 1 bis 5,
**dadurch gekennzeichnet,**
**dass** ein erstes Vorgangsbearbeitungsmodul ein zweites vorgangsbearbeitungsmodul aufruft, indem das gemeinsame Startmodul (100) das zweite Vorgangsbearbeitungsmodul startet und ein Maskenarbeitsbereich des zweiten Vorgangsbearbeitungsmoduls initialisiert wird, wobei der zweite Maskenarbeitsbereich bei der Initialisierung und Abarbeitung von mindestens einem Steuerelement über seine Darstellungskomponente auf Inhalte seines Datencontainers zugreift.

7. Verfahren nach einem oder mehreren der Ansprüche 1 bis 6,
**dadurch gekennzeichet,**
dass die Controller-Konfigurationsdatei (60) und/oder die Datencontainer-Konfigurationsdatei (61) im XML-Format bereitgestellt werden.

8. Vorrichtung zum rechnergestützten Erzeugen einer graphischen Benutzeroberfläche (10) auf einem Anzeigemittel (12) für eines von mehreren Vorgangsbearbeitungsmodulen (30), wobei die Benutzeroberfläche (10) wenigstens ein Steuerelement (11) aufweist und das Vorgangsbearbeitungsmodul (30) mit wenigstens einem weiteren Vorgangsbearbeitungsmodul auf einem Computermittel installiert ist und ein Vorgangsbearbeitungsmodul zur elektronischen Abarbeitung eines Vorgangs innerhalb eines Retailsystems ausgestaltet ist, wobei ein Vorgangsbearbeitungsmodul die erforderlichen Daten für den betreffenden Vorgang sammelt,
wobei jedes Vorgangsbearbeitungsmodul (30) jeweils wenigstens eine Controller-Konfigurationsdatei (60), eine Datencontainer-Konfigurationsdatei (61), einen Maskenarbeitsbereich (50), eine Funktionseinheit (90) und einen Datencontainer (40) aufweist und die Vorrichtung ferner folgende Merkmale aufweist:
- Startmodul (100) zum Starten des Vorgangsbearbeitungsmoduls (30), wobei das Startmodul Mittel zum Initialisieren wenigstens eines Controllers (70), der Funktionseinheit (90) und des Datencontainers (40) aufweist;
- Controller (70), umfassend wenigstens
• Mittel zum Einlesen der Controller-Konfigurationsdatei (60), wobei die Controller-Konfigurationsdatei (60) wenigstens eine Konfiguration der Darstellung des Maskenarbeitsbereiches (50) des vorgangsbearbeitungsmoduls (30) enthält,
• Mittel zum Hinterlegen einer Konfiguration von wenigstens einem Datenobjekt (41) des Datencontainers (40) und einer Konfiguration von Operationen für die Kommunikation zwischen dem Maskenarbeitsbereich (50), der Funktionseinheit (90) und dem Datencontainer (40) in einer zu dem Vorgangsbearbeitungsmodul (30) gehörenden Datencontainer-Konfigurationsdatei (61),
• Mittel zum Einlesen der Datencontainer-Konfigurationsdatei (61) zur Initialisierung des Datencontainers (40),
• Mittel zum Initialisieren einer Darstellungskomponente (80), die eine Verbindung zwischen dem wenigstens einen Maskenarbeitsbereich (50) und dem Datencontainer (40) herstellt,
• Mittel zum Ermitteln und Initialisieren des Maskenarbeitsbereiches (50) des Vorgangsbearbeitungsmoduls (30);
- Maskenarbeitsbereich (50), umfassend wenigstens
• Mittel zum Darstellen des wenigstens einen Steuerelements (11) als graphische Benutzeroberfläche (10) auf dem Anzeigemittel (12) zur Interaktion eines Benutzers (20) mit dem Vorgangsbearbeitungsmodul (30),
• Mittel zum Initialisieren des wenigstens einen Steuerelements (11) des Maskenarbeitsbereiches (50),
• Mittel zum Füllen und/oder Abarbeiten des wenigstens einen Steuerelements (11) des Maskenarbeitsbereichs (50),
• Mittel zum Zugreifen auf das wenigstens eine Datenobjekt (41) des Datencontainers (40) über die Darstellungskomponente (80), wobei
- die Vorrichtung eine Schnittstelle zum Einlesen von Werten aus einer Datenquelle und zum Zuordnen des Inhaltes der Datenquelle zu dem wenigstens einen Datenobjekt (41) des Datencontainers (40) des vorgangsbearbeitungsmoduls (30) umfasst und dass die Vorrichtung Mittel zur Befüllung des wenigstens einen Datenobjektes (41) mit Werten der Datenquelle aufweist.

9. Vorrichtung nach Anspruch 8,
**dadurch gekennzeichnet,**
**dass** das Computermittel in Verbindung mit einem Anzeigemittel (12) zum Darstellen der graphischen Benutzeroberfläche (10) steht und der Maskenarbeitsbereich (50) Mittel zum Darstellen des wenigstens einen Steuerelements (11) auf dem Anzeigemittel (12) aufweist.

10. Computerlesbares Medium, das Befehle zum Ausführen der Schritte des Verfahrens 1 auf einem Computermittel aufweist.

## Claims

1. A method for the computer-assisted generation of a graphic user interface (10) on a display means (12) for one of several transaction processing modules (30), whereby the user interface (10) has at least one control element (11) and the transaction processing module (30) is installed with at least one additional transaction processing module on a computing means, and a transaction processing module electronically processes a transaction within a retail system, whereby a transaction processing module collects the requisite data for the appertaining transaction, comprising the following steps:
- associating at least one mask working area (50) having at least one control element (11) with the transaction processing module (30), whereby a data object (41) is associated with each control element (11);
- associating a data container (40) having the at least one data object (41) with the transaction processing module (30);
- associating a function unit (90) with the transaction processing module (30);
- storing at least one configuration of the depiction of the mask working area (50) in a controller configuration file (60) belonging to the transaction processing module (30);
- storing a configuration of the at least one data object (41) of the data container (40) and storing a configuration of the operations for the communication between the mask working area (50), the function unit (90) and the data container (40) in a data container configuration file (61) belonging to the transaction processing module (30);
- starting the transaction processing module (30) by means of a starting module (100), whereby at least one controller (70), the function unit (90) and the data container (40) of the transaction processing module (30) are initialized at the time of the start;
- reading in the controller configuration file (60) belonging to the transaction processing module (30) for purposes of initializing the controller (70);
- reading in the data container configuration file (61) for purposes of initializing the data container (40);
- initializing a depiction component (80) by the controller (70), whereby the depiction component (80) establishes a connection between the at least one mask working area (50) and the data container (40);
- determining and initializing by the controller (70) the mask working area (50) of the transaction processing module (30) stored in the read-in controller configuration file (60);
- initializing the at least one control element (11) of the mask working area (50);
- depicting the at least one control element (11) as a graphic user interface on the display means (12) for interaction of a user (20) with the transaction processing module (30); and
- filling and/or processing the at least one control element (11) of the mask working area (50), whereby the mask working area (50) accesses the at least one data object (41) of the data container (40) via the depiction component (80), whereby
- via an interface, values are read in from a data source, whose content can be associated with the at least one data object (41) of the data container (40), and the at least one control element (11) of the mask working area (50) if filled and/or processed, whereby the mask working area (50) accesses the at least one data object (41) of the data container (40) via the depiction component (80), and the at least one data object (41) is automatically filled with values from the data source.

2. The method according to Claim 1,
**characterized in that**
a mask sequence plan consisting of several mask working areas (50) is associated with the transaction processing module (30) and this mask sequence plan is stored in the controller configuration file (60).

3. The method according to Claim 1 or 2,
**characterized in that**
the data source is a file.

4. The method according to one of Claims 1 to 3,
**characterized in that**,
when a value is changed in the function unit (90), the data object (41) associated with the value is forwarded via the depiction component (80) to the mask working area (50) and thus to all of the control elements (11) that depict the value.

5. The method according to one or more of Claims 1 to 4,
**characterized in that**,
when a value of a control element (11) is changed, the value is forwarded to the function unit (90) and to the data container (40), whereby the value for the data object (41) that is associated with the control element (11) is stored.

6. The method according to one or more of Claims 1 to 5,
**characterized in that**
a first transaction processing module calls a second transaction processing module **in that** the shared starting module (100) starts the second transaction processing module and a mask working area of the second transaction processing module is initialized, whereby, during the initialization and processing of at least one control element, the second mask working area accesses contents of its data container via its depiction component.

7. The method according to one or more of Claims 1 to 6,
**characterized in that**
the controller configuration file (60) and/or the data container configuration file (61) are provided in XML format.

8. A device for the computer-assisted generation of a graphic user interface (10) on a display means (12) for one of several transaction processing modules (30), whereby the user interface (10) has at least one control element (11) and the transaction processing module (30) is installed with at least one additional transaction processing module on a computing means, and a transaction processing module is configured for electronically processing a transaction within a retail system, whereby a transaction processing module collects the requisite data for the appertaining transaction,
whereby each transaction processing module (30) has at least one controller configuration file (60), one data container configuration file (61), one mask working area (50), one function unit (90) and one data container (40), and the device also has the following features:
- a starting module (100) for starting the transaction processing module (30), whereby the starting module has means for the initialization of at least one controller (70), of the function unit (90) and of the data container (40);
- a controller (70) comprising at least
• means for reading in the controller configuration file (60), whereby the controller configuration file (60) contains at least one configuration of the depiction of the mask working area (50) of the transaction processing module (30),
• means for storing a configuration of at least one data object (41) of the data container (40) and for storing a configuration of operations for the communication between the mask working area (50), the function unit (90) and the data container (40) in a data container configuration file (61) belonging to the transaction processing module (30),
• means for reading in the data container configuration file (61) for purposes of initializing the data container (40),
• means for initializing a depiction component (80) that establishes a connection between the at least one mask working area (50) and the data container (40),
• means for determining and initializing the mask working area (50) of the transaction processing module (30);
- a mask working area (50), comprising at least
• means for depicting the at least one control element (11) as a graphic user interface (10) on the display means (12) for interaction of a user (20) with the transaction processing module (30),
• means for initializing the at least one control element (11) of the mask working area (50),
• means for filling and/or processing the at least one control element (11) of the mask working area (50),
• means for accessing the at least one data object (41) of the data container (40) via the depiction component (80), whereby
- the device comprises an interface for reading in values from a data source and for associating the content of the data source with the at least one data object (41) of the data container (40) of the transaction processing module (30), and whereby the device has means for filling the at least one data object (41) with values from the data source.

9. The device according to Claim 8,
**characterized in that**
the computing means is in communication with a display means (12) for depicting the graphic user interface (10), and the mask working area (50) has means for depicting the at least one control element (11) on the display means (12).

10. A computer-readable medium that comprises commands for the execution of the steps of the method 1 on a computing means.

## Revendications

1. Procédé pour créer, de manière assistée par ordinateur, une interface utilisateur graphique (10) sur un moyen d'affichage (12) pour l'un de plusieurs modules de traitement d'opérations (30), l'interface utilisateur (10) comportant au moins un élément de commande (11) et le module de traitement d'opérations (30) étant installé avec au moins un autre module de traitement d'opérations sur un moyen informatique et un module de traitement d'opérations exécutant électroniquement une opération dans un système de vente au détail, un module de traitement d'opérations collectant les données requises pour l'opération concernée, comprenant les étapes suivantes :
- affectation d'au moins une zone de masque opérationnelle (50) avec au moins un élément de commande (11) au module de traitement d'opérations (30), un objet de données (41) étant affecté à chaque élément de commande (11) ;
- affectation d'un conteneur de données (40) avec l'au moins un objet de données (41) au module de traitement d'opérations (30) ;
- affectation d'une unité fonctionnelle (90) au module de traitement d'opérations (30) ;
- dépôt d'au moins une configuration de la représentation de la zone de masque opérationnelle (50) dans un fichier de configuration de contrôleur (60) faisant partie du module de traitement d'opérations (30) ;
- dépôt d'une configuration de l'au moins un objet de données (41) du conteneur de données (40) et d'une configuration des opérations pour la communication entre la zone de masque opérationnelle (50), l'unité fonctionnelle (90) et le conteneur de données (40) dans un fichier de configuration de conteneur de données (61) faisant partie du module de traitement d'opérations (30) ;
- démarrage du module de traitement d'opérations (30) par un module de lancement (100), au moins un contrôleur (70), l'unité fonctionnelle (90) et le conteneur de données (40) du module de traitement d'opérations (30) étant initialisés au démarrage ;
- lecture du fichier de configuration de contrôleur (60) faisant partie du module de traitement d'opérations (30) pour initialiser le contrôleur (70) ;
- lecture du fichier de configuration de conteneur de données (61) pour initialiser le conteneur de données (40) ;
- initialisation d'une composante de représentation (80) par le contrôleur (70), la composante de représentation (80) établissant une liaison entre au moins une zone de masque opérationnelle (50) et le conteneur de données (40) ;
- détermination et initialisation, par le contrôleur (70), de la zone de masque opérationnelle (50) du module de traitement d'opérations (30) déposée dans le fichier de configuration de contrôleur (60) lu ;
- initialisation d'au moins un élément de commande (11) de la zone de masque opérationnelle (50) ;
- représentation d'au moins un élément de commande (11) en tant qu'interface utilisateur graphique sur le moyen d'affichage (12) pour permettre l'interaction entre un utilisateur (20) et le module de traitement d'opérations (30) et
- remplissage et/ou exécution d'au moins un élément de commande (11) de la zone de masque opérationnelle (50), la zone de masque opérationnelle (50) accédant à l'au moins un objet de données (41) du conteneur de données via la composante de représentation (80),
- des valeurs étant lues à partir d'une source de données via une interface, valeurs dont le contenu peut être associé à au moins une objet de données (41) du conteneur de données (40), et au moins un élément de commande (11) de la zone de masque opérationnelle (50) étant rempli et/ou exécuté, la zone de masque opérationnelle (50) accédant à au moins un objet de données (41) du conteneur de données (40) via la composante de représentation (80) et au moins un objet de données (41) étant rempli automatiquement par des valeurs de la source de données.

2. Procédé selon la revendication 1, **caractérisé en ce qu'**un plan de déroulement de masque comprenant plusieurs zones de masque opérationnelles (50) est affecté au module de traitement d'opérations (30) et ce plan est déposé dans le fichier de configuration de contrôleur (60).

3. Procédé selon la revendication 1 ou 2, **caractérisé en ce que** la source de données est un fichier.

4. Procédé selon l'une des revendications 1 à 3, **caractérisé en ce que**, étant donné une modification d'une valeur dans l'unité fonctionnelle (90), il se produit, via la composante de représentation (80), une transmission de l'objet de données (41) affecté à la valeur vers la zone de masque opérationnelle (50) et, par conséquent, vers tous les éléments de commande (11) qui représentent la valeur.

5. Procédé selon l'une ou plusieurs des revendications 1 à 4, **caractérisé en ce que**, étant donné une modification d'une valeur d'un élément de commande (11), il se produit une transmission de la valeur à l'unité fonctionnelle (90) et au conteneur de données (40), la valeur en rapport avec l'objet de données (41) qui est affecté à l'élément de commande (11) étant stockée.

6. Procédé selon l'une ou plusieurs des revendications 1 à 5, **caractérisé en ce qu'**un premier module de traitement d'opérations appelle un deuxième module de traitement d'opérations par le fait que le module de démarrage commun (100) démarre le deuxième module de traitement d'opérations et initialise une zone de masque opérationnelle du deuxième module de traitement d'opérations, la deuxième zone de masque opérationnelle accédant, à l'initialisation et à l'exécution d'au moins un élément de commande, à des contenus du conteneur de données de celui-ci via la composante de représentation de celui-ci.

7. Procédé selon l'une ou plusieurs des revendications 1 à 6, **caractérisé en ce que** le fichier de configuration de contrôleur (60) et/ou le fichier de configuration de conteneur de données (61) sont fournis au format XML.

8. Dispositif pour créer, de manière assistée par ordinateur, une interface utilisateur graphique (10) sur un moyen d'affichage (12) pour l'un de plusieurs modules de traitement d'opérations (30), l'interface utilisateur (10) comportant au moins un élément de commande (11) et le module de traitement d'opérations (30) étant installé avec au moins un autre module de traitement d'opérations sur un moyen informatique et un module de traitement d'opérations étant réalisé pour exécuter électroniquement une opération dans un système de vente au détail, un module de traitement d'opérations collectant les données requises pour l'opération concernée, chaque module de traitement d'opérations (30) comportant respectivement au moins un fichier de configuration de contrôleur (60), un fichier de configuration de conteneur de données (61), une zone de masque opérationnelle (50), une unité fonctionnelle (90) et un conteneur de données (40) et le dispositif présentant en outre les caractéristiques suivantes :
- un module de démarrage (100) pour démarrer le module de traitement d'opérations (30), le module de démarrage comportant des moyens pour initialiser au moins un contrôleur (70), l'unité fonctionnelle (90) et le conteneur de données (40) ;
- un contrôleur (70), comprenant au moins
■ un moyen pour lire le fichier de configuration de contrôleur (60), le fichier de configuration de contrôleur (60) contenant au moins une configuration de la représentation de la zone de masque opérationnelle (50) du module de traitement d'opérations (30),
■ un moyen pour déposer une configuration d'au moins un objet de données (41) du conteneur de données (40) et une configuration d'opérations pour la communication entre la zone de masque opérationnelle (50), l'unité fonctionnelle (90) et le conteneur de données (40) dans un fichier de configuration de conteneur de données (61) faisant partie du module de traitement d'opérations (30),
■ un moyen pour lire le fichier de configuration de conteneur de données (61) pour initialiser le conteneur de données (40),
■ un moyen pour initialiser une composante de représentation (80) qui établit une liaison entre au moins une zone de masque opérationnelle (50) et le conteneur de données (40),
■ un moyen pour déterminer et initialiser la zone de masque opérationnelle (50) du module de traitement d'opérations (30),
- une zone de masque opérationnelle (50), comprenant au moins
■ un moyen pour représenter au moins un élément de commande (11) en tant qu'interface utilisateur graphique (10) sur le moyen d'affichage (12) pour permettre l'interaction entre un utilisateur (20) et le module de traitement d'opérations (30),
■ un moyen pour initialiser au moins un élément de commande (11) de la zone de masque opérationnelle (50),
■ un moyen pour remplir et/ou exécuter au moins un élément de commande (11) de la zone de masque opérationnelle (50),
■ un moyen pour accéder à au moins un objet de données (41) du conteneur de données (40) via la composante de représentation (80),
- le dispositif comprenant une interface pour lire des valeurs à partir d'une source de données et pour associer le contenu de la source de données à au moins un objet de données (41) du conteneur de données (40) du module de traitement d'opérations (30) et le dispositif comportant des moyens pour remplir au moins un objet de données (41) avec des valeurs de la source de données.

9. Procédé selon la revendication 8, **caractérisé en ce que** le moyen informatique est en liaison avec un moyen d'affichage (12) pour représenter l'interface utilisateur graphique (10) et la zone de masque opérationnelle (50) comporte des moyens pour représenter l'au moins un élément de commande (11) sur le moyen d'affichage (12).

10. Support lisible par ordinateur, lequel comporte des ordres pour exécuter sur un moyen informatique les étapes du procédé 1.
